# EUROPÄISCHE PATENTSCHRIFT

(11) **EP 3 156 967 B1**
(45) Veröffentlichungstag und Bekanntmachung des Hinweises auf die Patenterteilung: **12.12.2018**
(21) Anmeldenummer: 16193286.8
(22) Anmeldetag: 11.10.2016
(51) Int. Cl.: G06T 3/40, G06T 5/50

(54) **VERFAHREN UND VORRICHTUNG ZUM ERSTELLEN EINER MIKROSKOPIEPANORAMADARSTELLUNG**
METHOD AND DEVICE FOR CREATING A MICROSCOPIC PANORAMA
PROCÉDÉ ET DISPOSITIF DE GÉNÉRATION D'UNE REPRÉSENTATION PANORAMIQUE MICROSCOPIQUE

(30) Priorität: 14.10.2015 DE 102015219971
(43) Veröffentlichungstag der Anmeldung: 19.04.2017
(73) Patentinhaber: Fraunhofer-Gesellschaft zur Förderung der angewandten Forschung e.V., 80686 München (DE)
(72) Erfinder: Münzenmayer, Christian, 91469 Hagenbüchach (DE); Gryanik, Alexander, 91054 Erlangen (DE); Bergen, Tobias, 91052 Erlangen (DE); Wittenberg, Thomas, 91054 Erlangen (DE)
(74) Vertreter: Schenk, Markus

(56) Entgegenhaltungen:
- WO-A1-2013/016825
- US-A1- 2006 045 505
- US-A1- 2011 169 985

## Beschreibung

Ausführungsbeispiele der vorliegenden Erfindung beziehen sich auf ein Verfahren zur Erstellung einer Mikroskopiepanoramadarstellung sowie auf ein entsprechendes Computerprogramm. Weitere Ausführungsbeispiele beziehen sich auf eine Vorrichtung zum Erstellen einer Mikroskopiepanoramadarstellung sowie auf ein System umfassend die Vorrichtung und ein Mikroskop. Im Allgemeinen liegt der Erfindungskontext im Bereich der Bildanalyse und Visualisierung für die Mikroskopie.

Die Mikroskopie findet insbesondere Anwendung im medizinischen Bereich. In klinischen Laboren und Pathologie-Abteilungen werden täglich Gewebe, Zellen und Körperflüssigkeiten untersucht, d. h. visuell unter einem Mikroskop begutachtet. Diese können je nach Größe des Labors oder Abteilung wenige Dutzend bis mehrere 1000 Objektträger pro Tag sein.

Die Ergebnisse dieser Untersuchung (der Befund) werden im Falle einer histopathologischen Untersuchung von Gewebeschnitten durch den Pathologen diktiert und dann in einen Befundbrief übertragen. Für die Zytopathologie oder Hämatologie (z. B. bei der Erstellung des Differenzialblutbilds oder bei der Knochenmarkanalyse) werden z. B. verschiedene Zellarten gezählt und die Paramater über eine Tastatur dokumentiert.

Unabhängig von diesen inhaltlich-textuellen Informationen ist gleichermaßen die ikonische (bildhafte) Dokumentation der untersuchten Gewebezellen / Körperflüssigkeit durch geeignete digitale Bilder oder Bildausschnitte zunehmend relevant und wichtig.

Für die bildbasierte Dokumentation bestehen derzeit zwei grundsätzliche Lösungsansätze. Entsprechend einem ersten Lösungsansatz wird ein sogenannter digitaler Slidescanner oder ein automatisiertes Mikroskop (d. h. also insbesondere mit einem automatisierten bzw. motorisch bewegbaren Tisch für die Positionierung der Objektträger) verwendet. Hiermit können Objektträger großflächig digitalisiert und archiviert werden. Aufgrund der automatisch erfassten digitalisierten Bilder lassen sich bei Bedarf Panoramen direkt während der Scan-Operation erstellen bzw. unter Nutzung von globalen Optimierungsverfahren auch im Nachhinein (in höherer Qualität). Ein Beispiel für ein derartiges System istdas Zeiss AxioScan.Z1-System. Jedoch sind die Kosten von derartigen digitalen Slidescannern relativ hoch, so dass damit eine noch geringe Verbreitung dieser Konzepte einhergeht.

Wenn man davon ausgeht, dass die Vielzahl der Mikroskopieaufnahmen, die zusammengefügt (d. h. also Kachel an Kachel) eine Mikroskopiepanoramadarstellung bilden, bereits in digitalisierter Form vorliegen, können mit bereits am Markt erhältlichen Stitching-Software-Programmen Mikroskopiepanoramadarstellungen aus den Einzelbildern erzeugt werden. Ein Beispiel für eine solche Software ist Microsoft Image Composite Editor. Mit einer solchen Software, die Offline-Mikroskopiepanoramadarstellungen erstellt, besteht allerdings der Nachteil, dass die Panoramen nicht in Echtzeit visualisiert werden können. Dies hat die Konsequenz, dass der Benutzer nur schwer erkennen kann, ob er ein vollständiges Panorama aufnimmt oder "Löcher" bzw. "weiße Kacheln" im Bild verbleiben. Dies ist insbesondere von Bedeutung für manuelle Mikroskope ohne automatisierten XY-Tisch. Ferner kann infolgedessen durch Benutzer keine Korrektur vorgenommen werden, falls aufgenommene Bilder nicht korrekt zusammengesetzt werden.

Ein zweites Konzept liegt in der Nutzung einer Digitalkamera in Kombination mit einem manuellen Mikroskop. Digitalkameras, die an ein manuell zu bedienendes Mikroskop (ohne motorisch betriebenen Verfahrtisch (Kreuztisch)) und entsprechende Bilderfassungs-Software, angeschlossen werden gehören zum Stand der Technik und sind heutzutage weit verbreitet. Bild- und Datenmanagementsysteme für die Pathologie besitzen heutzutage Schnittstellen um Einzelbilder von digitalen Kameras direkt mit dem Befund bzw. der elektronischen Patientenakte zu verknüpfen.

Je nach Ausstattung verfügen diese "manuellen" Mikroskopie-Systeme i.d.R. über eine Weißlicht (Gegenlicht) Beleuchtung, höherwertige Systeme verfügen auch über Phasenkontrast oder/und Fluoreszenzbeleuchtungen. Hierbei können jedoch in der Regel nur Einzelbilder, aber keine großflächigen Bereiche in hoher Auflösung erfasst und dokumentiert werden. Deshalb besteht der Bedarf nach einem verbesserten Ansatz.

Die US 2006/045505 A1 zeigt einen Ansatz, um ein digitales, virtuelles Bild zu erzeugen. Hierzu wird ein "physical slide" an mehreren Regionen gescannt und zwar so, dass von jeder Region zumindest zwei Fokus-Positionen z1 und z2 erhalten werden.

Aufgabe der vorliegenden Erfindung ist es ein Konzept zu schaffen, die die Erstellung von Mikroskopiepanoramadarstellungen in Echtzeit ermöglicht.

Die Aufgabe wird durch die unabhängigen Patentansprüche gelöst.

Ausführungsbeispiele der vorliegenden Erfindung schaffen ein Verfahren zur Erstellung einer Mikroskopiepanoramadarstellung einer dreidimensionalen Probe mit flacher Ausdehnung in x und y Richtung. Das Verfahren umfasst die Schritte gemäß Anspruch 1.

Der vorliegenden Erfindung liegt also die Erkenntnis zugrunde, dass mehrere mittels eines Mikroskops (mit/ohne motorisch betätigbaren Positionierer, z.B. Kreuztisch, Linearachen, Roboter, etc.) und mittels einer Kamera aufgenommene Bilder, die als Mikroskopieaufnahmen betitelt sind, miteinander zusammengefügt werden können, um eine Mikroskopiepanoramadarstellung zu erhalten. Hierbei können, müssen aber nicht unterschiedliche Ausschnitte in den Bildern vorhanden sein. Vielmehr unterscheidet sich die Mehrzahl der Bilder dadurch, dass während der Aufnahme eine Veränderung in z-Richtung, also z. B. hinsichtlich Fokuspunkt oder hinsichtlich Vergrößerungsfaktors, erfolgt ist. Somit ist es also entsprechend dem obigen Verfahren möglich, eine Mikroskopiedarstellung und einen Bereich derselben z. B. mit erhöhter Auflösung oder mit einer veränderten Tiefenschärfeneinstellung bzw. unterschiedlichen Fokussierungsebenen in ein und derselben Mikroskopiepanoramadarstellung zu kombinieren, wobei die für die Registrierung wichtigen Veränderungsinformationen (also Zoom oder veränderter Fokus oder verschobener Ausschnitt) direkt aus dem Bilderstrom gewonnen werden. Somit ermöglicht diese Erfindung auch die interaktive Digitalisierung großflächiger Bereiche eines mikroskopischen Positionierers (oder andere technische Oberflächen) ohne Verwendung eines motorisierten Mikroskops bzw. eines vollautomatischen Slidescanners. Insofern kann das Verfahren mittels handelsüblichen Mikroskopen und Digitalkameras verwendet werden. Gegenüber dem Stand der Technik ist diese Variante wesentlich kostengünstiger und kann auch in bestehende Mikroskoparbeitsplätze leicht eingebunden werden, so dass eine verbesserte Digitalisierung der Präparate und eine vereinfachte Dokumentation der Probe möglich ist. Entsprechend den bevorzugten Ausführungsbeispielen ist sie durch eine interaktive Bilddokumentation (z. B. eine Bilddokumentation mit einem Bereich, der in unterschiedlichen Vergrößerungsstufen oder in unterschiedlichen Fokussierungsebenen vorliegt) erreichbar. Entsprechend Ausführungsbeispielen werden also zwei unterschiedliche Mikroskopieaufnahmen mit unterschiedlicher Fokussierung oder unterschiedlicher Schärfe in der Art zusammengefügt, dass die Mikroskopieaufnahme bzw. ein Bereich aus einer Mikroskopieaufnahme in eine andere eingefügt bzw. mit einer anderen verbunden wird, wenn sie, relativ gesehen, das größte Schärfemaß aufweist. Entsprechend Ausführungsbeispielen kann das Verfahren deshalb auch den Schritt des Bestimmens eines globalen oder eines bereichsweisen Schärfemaßes je Mikroskopieaufnahme oder je Bereich einer Mikroskopieaufnahme aufweisen. Die Bestimmung des größten relativen Schärfemaßes erfolgt dann beispielsweise mittels eines Vergleichs.

Entsprechend weiteren Ausführungsbeispielen unterscheidet sich die erste und die zweite Mikroskopieaufnahme auch im Hinblick auf ihren Vergrößerungsfaktor, so dass beispielsweise eine Mikroskopieaufnahme einen größeren Vergrößerungsfaktor im Vergleich zu der anderen Mikroskopieaufnahme in die andere Mikroskopieaufnahme eingefügt bzw. mit dieser verbunden wird. Entsprechend Ausführungsbeispielen wird der Vergrößerungsfaktor entweder anhand des Bildinhalts bestimmt oder ein Objektivwechsel, z. B. anhand einer temporär verdeckten Region in dem Bilderstrom erkannt. In der Konsequenz heißt das, dass man das Zusammenfügen von zwei Mikroskopieaufnahmen mit unterschiedlichen Vergrößerungsfaktoren die Mikroskopiepanoramadarstellung in einem Bereich eine erhöhte Aufnahme aufweist. An dieser Stelle sei angemerkt, dass entsprechend Ausführungsbeispielen immer nur Bereiche, die zueinander registriert sind (d. h. besser zueinander ausgerichtet sind und denselben Objektausschnitt darstellen) gegeneinander ausgetauscht werden. Somit kann entsprechend zusätzlichen Ausführungsbeispielen das obige Verfahren auf den Schritt des Registrierens von Übereinstimmungsbereichen in der ersten und zweiten Mikroskopieaufnahme beim Zusammenfügen aufweisen. In Bezug auf die Übereinstimmungsbereiche sei angemerkt, dass je nach Bewegung und Bildsequenz unterschiedlich große Überlappungen, wie z. B. 90% Überlappung oder 100% Überlappung, aber auch nur 5% Überlappung denkbar wären.

Bei obigen Ausführungsbeispielen wurde davon ausgegangen, dass in Übereinstimmungsbereichen ein Bereich der zweiten Mikroskopiedarstellung in die erste Mikroskopiedarstellung in die erste Mikroskopiedarstellung für die Mikroskopiepanoramadarstellung eingefügt wird. Entsprechend weiteren Ausführungsbeispielen können diese Überlappbereiche auch miteinander verschmolzen werden oder auch doppelt bzw. mehrfach in der Mikroskopiepanoramadarstellung vorliegen, so dass also in manchen Bereichen mehrere Speicherebenen vorhanden sind, die denselben Ausschnitt darstellen, sich in Hinblick auf Auflösung, Fokus und/oder Schärfe unterscheiden.

Entsprechend Ausführungsbeispielen kann ein Zusammenfügen selbstverständlich auch eine Verschiebung der zusammenzufügenden Ausschnitte in x- und/oder y-Richtung, d. h. also ein laterale Verschiebung erfolgen. Für den Fall, dass zwischen zwei aufgenommenen Mikroskopieaufnahmen kein Überlappbereich besteht, sondern diese zwei Mikroskopieaufnahmen nur durch ein oder mehrere weitere Mikroskopieaufnahmen, die zu einem späteren Zeitpunkt genommen sind, miteinander verbunden sind, kann das Verfahren das Zusammenfügen der zwei zuerst aufgenommenen Mikroskopieaufnahmen nach dem Schritt des Aufnehmens der dritte(n) Mikroskopieaufnahme(n) ausgeführt werden.

Entsprechend weiteren Ausführungsbeispielen ist, insbesondere bei Vorliegen einer Vielzahl von Mikroskopieaufnahmen auch eine Optimierung der Position bzw. Ausrichtung der einzelnen Mikroskopieaufnahmen im Nachgang bzw. Vorliegen einer genügenden Anzahl an Mikroskopieaufnahmen möglich, bei der der Fehler im Hinblick auf die Anordnung der Mikroskopieaufnahmen zueinander minimiert wird.

Entsprechend weiteren Ausführungsbeispielen ist es auch denkbar, dass für unterschiedliche Aufnahme-Modi die oben erläuterten Schritte (ggf. mit Ausnahme des Schritts der Verschiebung in z-Richtung) wiederholt werden. Die Modi können sich beispielsweise im Hinblick auf einen Weißlichtabgleich oder im Hinblick auf die Bildgewinnungsmodalität (z.B. Weißlicht-Weitfeld, Phasenkontrast, Fluoreszenz, Dunkeldfeld/Hellfeld und weitere) unterscheiden.

Entsprechend weiteren Ausführungsbeispielen kann das Verfahren auch durch ein Computerprogramm ausgeführt bzw. unterstützt werde.

Weitere Ausführungsbeispiele schaffen eine Vorrichtung zum Erstellen einer Mikroskopiepanoramadarstellung, einer dreidimensionalen Probe mit flacher Ausdehnung in x und y Richtung. Die Vorrichtung umfasst eine Schnittstelle und eine Berecheneinheit. Die Schnittstelle ist ausgebildet, um den Empfang einer ersten Mikroskopieaufnahme der Probe mit einem ersten Ausschnitt und einer zweiten Mikroskopieaufnahme mit einem zweiten Ausschnitt, wobei sich die Mikroskopieaufnahmen eben im Hinblick auf die Perspektive in z-Richtung unterscheiden. Die Berecheneinheit ist ausgebildet, eine Veränderungsinformation, die einen Rückschluss auf die Veränderung der Perspektive in z-Richtung zulässt, anhand des Unterschieds zwischen den zwei Mikroskopieaufnahmen zu ermitteln, und die zwei Mikroskopieaufnahmen unter Berücksichtigung der Veränderungsinformation so zusammenzufügen, dass ein Mikroskopiepanoramadarstellung erhalten wird.

Entsprechend weiteren Ausführungsbeispielen wird auch ein System geschaffen, das die eben erläuterte Vorrichtung in Kombination mit einem Mikroskop umfasst.

Weiterbildungen sind in den Unteransprüchen definiert. Ausführungsbeispiele der vorliegenden Erfindung werden anhand der beiliegenden Zeichnungen erläutert. Es zeigen:
- Fig. 1a: ein schematisches Flussdiagramm zur Illustration des Verfahrens zur Erstellung einer Mikroskopiepanoramadarstellung gemäß Ausführungsbeispielen;
- Fig. 1b: eine schematische Darstellung einer Mikroskopiepanoramadarstellung, die einen Bereich mit einer lokalen Vergrößerung (Veränderung in z-Richtung) aufweist, zur Illustration des Verfahrens aus Fig. 1a;
- Fig. 1c: eine schematische Darstellung einer Mikroskopiepanoramadarstellung, die in einem überlappenden Bereich Bildinformationen mit einer veränderten Fokussierung (Veränderung in z-Richtung) aufweist, zur Illustration des Verfahrens aus Fig. 1a;
- Fig. 2a-2f: schematische Mikroskopieaufnahmen bzw. Mikroskopiepanoramadarstellungen zur Illustration des Ablaufs bei der Erstellung von Mikroskopiepanoramadarstellungen gemäß Ausführungsbeispielen;
- Fig. 3a-3e: schematische Blockdiagramme zur Illustration eines bestimmten Modus bei der Erstellung von Mikroskopiepanoramadarstellung gemäß Ausführungsbeispielen; und
- Fig. 4: ein System mit einem Mikroskop und einer Vorrichtung zur Erstellung von Mikroskopiepanoramadarstellungen gemäß Ausführungsbeispielen.

Bevor nachfolgend Ausführungsbeispiele der vorliegenden Erfindung anhand der Figuren erläutert werden sei darauf hingewiesen, dass gleiche Elemente und Strukturen mit gleichen Bezugszeichen versehen sind, so dass die Beschreibung der aufeinander anwendbar bzw. austauschbar ist.

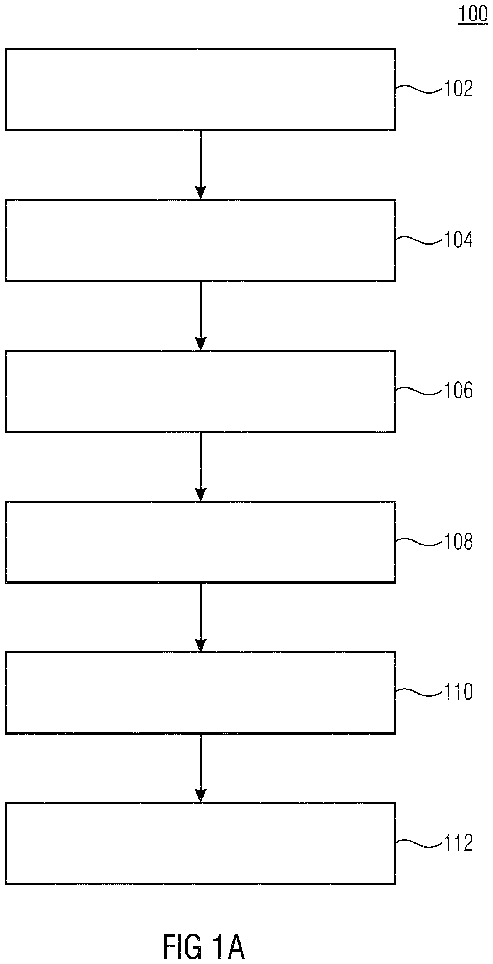

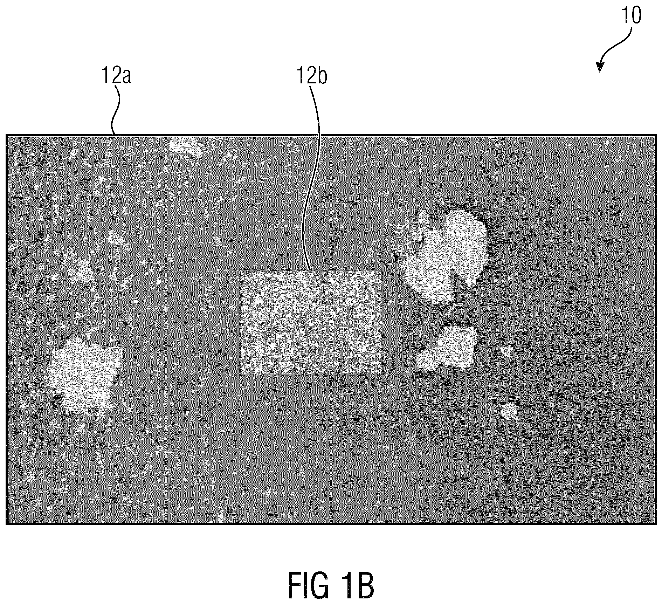

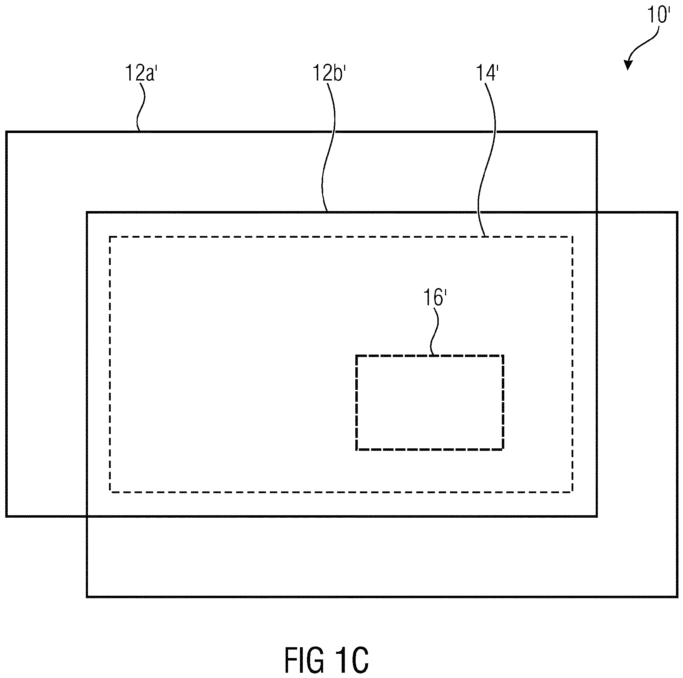

Fig. 1a zeigt das Verfahren zur Erstellung einer Mikroskopiedarstellung 100. Das Verfahren 100 umfasst die sechs Basisschritte 102-112, die nachfolgend insbesondere anhand von Fig. 1b, aber auch anhand von Fig. 1c erläutert werden.

Fig. 1b zeigt eine Mikroskopiepanoramadarstellung 10, umfassend die Mikroskopiedarstellungen 12a und 12b, die ineinander zusammengefügt sind und so die gesamte Mikroskopiepanoramadarstellung 10 formen. Die Mikroskopieaufnahmen 12a und 12b sind mittels einer Bilderfassungsvorrichtung, wie z. B. einer Kamera unter Nutzung eines Mikroskops gewonnen. Typischerweise werden mit Mikroskopen Proben, welche als zweidimensionales (also flächiges) Element vorliegen untersucht. Die Proben weisen häufig aufgrund ihrer lateralen Ausdehnungen x- und y-Richtung einen größeren zu untersuchenden Bereich auf als der Ausschnitt, der mittels des Mikroskops bzw. mittels der einzelnen Mikroskopieaufnahmen 12a und 12b erfasst werden kann.

Bei Fig. 1b liegt die Mikroskopiepanoramadarstellung 12b, welche z. B. eine höhere Auflösung aufgrund dessen, dass sie mit einem anderen Vergrößerungsfaktor aufgenommen worden ist, aufweist, vollständig mit ihrem Ausschnitt innerhalb des Ausschnitts der Mikroskopieaufnahme 12a (Übersichtsaufnahme).

Im Gegensatz dazu stellt sich die Zusammenfügung der Mikroskopiepanoramadarstellung in Fig. 1c anders dar. Fig. 1c zeigt eine Mikroskopiepanoramadarstellung 10', bestehend aus den zwei Mikroskopieaufnahmen 12a' und 12b'. Wie zu erkennen ist, überlappen sich die Mikroskopiepanoramadarstellungen 12a' und 12b', die beispielsweise einen gleichen oder vergleichbaren Zoom-Faktor aufweisen, nur partiell (d. h. also nicht vollständig). Durch die Verschiebung des Ausschnitts auf die Probe zwischen den Mikroskopieaufnahmen 12a' und 12b' kann die sich entlang der x- und y-Richtung erstreckende Probe gegenüber einem größeren Bereich entlang der x- und y-Richtung untersucht bzw. abgebildet werden. Somit ist es also möglich, durch Aneinanderreihung von mehreren einzelnen Mikroskopieaufnahmen 12a' und 12b', die aneinander angrenzend sind oder sich in einem Überlappbereich überlappen, die gesamte Probe mittels der Mikroskopiepanoramadarstellung 10' erfasst werden. Der Überlappbereich 14' ist mit Strichlinien illustriert.

Bei dem Verfahren 100 werden in der Basisvariante, d. h. beim Zusammenfügen von zwei Mikroskopieaufnahmen 12a und 12b bzw. 12a' und 12b' zu der Mikroskopiepanoramadarstellung 10 bzw. 10' folgende Schritte durchgeführt. In einem ersten Schritt 102 wird die zweidimensionale Probe auf einem Positionierer, z. B. dem XY-Tisch des Mikroskops, der manuell, aber auch automatisch verschiebbar ist, angeordnet.

Der zweite Schritt 104 bezieht sich auf das Aufnehmen der Probe mittels einer Bilderfassungsvorrichtung, um die erste Mikroskopieaufnahme 12a bzw. 12a' mit dem ersten Ausschnitt zu erhalten. In einem nächsten Schritt 106 wird dann die Perspektive auf die Probe entlang der z-Richtung geändert. D. h. also, dass beispielsweise der Fokus auf die Probenoberfläche geändert wird, um z. B. in eine andere Ebene hinein zu fokussieren. Dies ist insbesondere bei der Mikroskopie wichtig, da häufig mit sehr geringen Tiefenschärfen gearbeitet wird, weil mit dem Mikroskop - auch wenn die Probe typischerweise flach ist - gerade minimale Erhebungen bzw. unterschiedliche Ebenen, welche aufgrund von partieller Transparenz der Probe entstehen, abgelichtet werden sollen. Alternativ zu der Variation des Fokuspunkts kann eine Variation des Zooms, z. B. durch ein Zoom-Objektiv oder durch ein verändertes Objektiv, erfolgen. In Folge eines vergrößerten Bereichs 12b weist diese eine höhere Auflösung auf. Auch weitere Variationen in z-Richtung, z. B. durch Einsatz von Filtern, so dass in unterschiedlichen Ebenen der Probe die Aufnahme genommen werden kann, sind denkbar.

Nachdem nun eben die Perspektive auf die Probe in z-Richtung verändert wurde, wird die zweite Mikroskopieaufnahme (vgl. Schritt 108) 12b bzw. 12b' mit einem zweiten Ausschnitt aufgenommen. An dieser Stelle sei nochmals angemerkt, dass sich der erste Bereich 12a bzw. 12a' und der zweite Bereich 12b bzw. 12b' hinsichtlich des Ausschnitts gleichen können oder auch nur den partiellen Überlappbereich aufweisen können, wobei sich dennoch der überlappende Bereich dadurch unterscheidet, dass seine Variation in z-Richtung, also beispielsweise eine veränderte Fokussierung bzw. wie in Fig. 1b dargestellt, ein veränderter Zoom, erfolgt ist. In einem weiteren Schritt 110 wird nun die Veränderung ausgehend von den zwei Bildern ermittelt. Beispielsweise kann aufgrund von einem zeitweise verdeckten Bereich ein Objektivwechsel erkannt werden, so dass daraus geschlossen werden kann, dass sich der Zoom (z.B. das Objektiv) verändert hat. Alternativ kann bei einer veränderten Fokussierung ein Schärfemaß je Mikroskopieaufnahme 12a vs. 12b bzw. 12a' vs. 12b' ermittelt werden, um so die Veränderung im Fokus zu erkennen. An dieser Stelle sei zusätzlich angemerkt, dass dieses Schärfemaß auch nur bereichsweise ermittelt werden kann. Nachdem nun die Veränderungsinformation erhalten ist, wird ausgehend von dieser in dem Schritt 112 die erste und die zweite Mikroskopieaufnahme 12a und 12b bzw. 12a' und 12b' miteinander zusammengefügt. Hierbei wird beispielsweise wie anhand von Fig. 1b zu erkennen ist, der Bereich 12b mit dem erhöhten Vergrößerungsfaktor bzw. mit der daraus resultierenden besseren Auflösung in dem Bereich 12a an der Stelle eingefügt, zu welcher eben der Ausschnitt der Mikroskopieaufnahme 12b passt. Hierzu wird auf das bekannte Registrierungsverfahren, die nachfolgend noch erläutert werden, zurückgegriffen.

Alternativ kann zwischen den Aufnahmen 12a' und 12b' auch ein lateraler Versatz stattgefunden haben, wobei beispielsweise der Vergrößerungsfaktor gleichbehalten wird (vgl. Fig. 1c). Die beiden Aufnahmen 12a' und 12b' weisen einen Überlappbereich 14' auf. Da, wie im Rahmen des Schritts 104 erläutert, eine Veränderung in z-Richtung stattgefunden hat, kann dieser Überlappbereich bzw. können sich die Aufnahmen 12a' und 12b' in diesem Überlappbereich im Hinblick auf einen veränderten Fokuspunkt oder eine veränderte Schärfeneinstellung (kleiner Blende, so dass eine erhöhte Tiefenschärfe erreicht wird) unterscheiden, wobei dann beim Zusammenfügen 112 beispielsweise die Mikroskopieaufnahme für den Bereich 14' ausgewählt wird, die ein erhöhtes Schärfenmaß aufweist, oder die in einem Bereich, hier mit dem Bezugszeichen 16' gekennzeichnet, in welchem beispielsweise eine Zelle im Detail untersucht werden soll, das größere Schärfenmaß aufweist. Wie oben, beim Ausführungsbeispiel mit der Vergrößerungsvariation erläutert, erfolgt auch hier beim Zusammenfügen der Aufnahmen 12a' und 12b' eine entsprechende Registrierung, um eben die richtigen Bereiche, z. B. das gesamte Bild 12b' inklusive dem Überlappbereich 14' mit dem übrig gebliebenen Rest der Mikroskopieaufnahme 12a' zusammenzufügen.

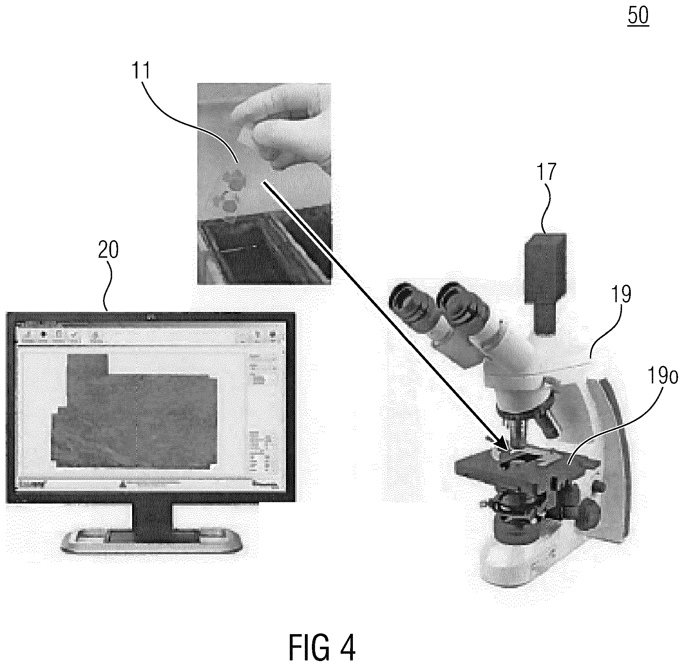

Nachfolgend wird kurz das hier angewendete Verfahren bei der Registrierung erläutert. Wie oben bereits erläutert, muss bei der hier in Bezug auf Fig. 1a erläuterten Lösung nicht zwingend ein Mikroskop mit einem motorisierten Tisch eingesetzt werden, sondern es reicht, wenn die Bühne per Hand bedient werden kann. Die Kamera, welche einem Mikroskop angeschlossen ist, ist direkt mit einer Vorrichtung, mit welcher ein Stitching-Verfahren durchgeführt wird, verbunden. Somit können Live-Bilder der Kamera, die das Präparat in unterschiedlichen Ausschnitten darstellen, direkt in die Software bzw. die Vorrichtung geladen werden, die sie so in Echtzeit zu dem Mikroskopie-Panorama zusammensetzen (zu stitchen). Zum Aufbau sei an dieser Stelle auf Fig. 4, welche die Vorrichtung zum Stitchen 20 bzw. ein Computer mit einer Stitching Software in Kombination mit einer Kamera 17 und einem manuellen Mikroskop 19 darstellt.

Das zugrunde liegende Stiching-Verfahren basiert beispielsweise auf einem Merkmalbasierten Rhythmus, mit dem in der ersten Mikroskopie-Aufnahme 12a bzw. 12a' mehrere Merkmale bestimmt werden und diese Merkmale in der zweiten Mikroskopie-Aufnahme 12b bzw. 12b' erneut bestimmt werden, so dass eine Verfolgung dieses Merkmal realisiert wird. Das Verfolgen der in der ersten Mikroskopie-Aufnahme 12a bzw. 12a' bestimmten Merkmale wird auch als Tracking bezeichnet. Als merkmalsbasierter Algorithmus kann beispielsweise der KLT-Algorithmus, der Harris-Corner-Detector, der Monotonie-Operator, der SIFT-Algorithmus (Scale Invariant Feature Transform) oder der SURF-Algorithmus (Speeded Up Robust Feature Transform) dienen. Aus den bestimmten und verfolgten Merkmalen wird nun eine Transformationsmatrix berechnet, die zum Zusammenfügen der Mikroskopie-Aufnahmen zu der Mikroskopiepanoramadarstellung dient. Die Transformationsmatrix weist zumindest sechs Freiheitsgrade auf, wobei hier davon ausgegangen werden kann, dass im Prinzip nur drei Freiheitsgrade, nämlich X und Y sowie Z, diese aber nur in einem bestimmten Rahmen, variiert werden, da bei einem fixen und nur lateral verschiebbaren Mikroskopieteller im Normalfall zu der Optik keine Verdrehung stattfindet. Die Transformationsmatrix ist beispielsweise eine affine Transformationsmatrix mit drei oder sechs Freiheitsgraden oder eine projektive Transformationsmatrix mit acht Freiheitsgraden. Aus der Menge der bestimmten Merkmalskorrespondenzen, also den ersten und zugehörigen zweiten Merkmalskoordinaten zu den Merkmalen wird die Transformationsmatrix berechnet, die die beiden Mikroskopieaufnahmen 12a/12a' und 12b/12b' ineinander überführt.

Der merkmalbasierte Algorithmus ermöglicht somit die Erstellung mikroskopischer Bildmosaike bzw. mikroskopische Gesamtpanoramadarstellungen aus einzelnen Mikroskopie-Aufnahmen, wobei durch den RANSAC-Algorithmus eine Ausreißererkennung für falsch verfolgte bzw. getrackte Merkmale bereitgestellt wird. Das Verfahren gewährleistet somit aufgrund des merkmalbasierten Algorithmus ein schnelles und aufgrund des RANSAC-Algorithmus ein genaues Zusammenfügen der einzelnen Bilder, auch wenn diese nur eine geringe Bildqualität (z. B. aufgrund von schneller Bewegung und gleichzeitiger Variation der Perspektive in der Z-Richtung) aufweisen. Das Verfahren ist insbesondere echtzeitfähig, wobei unter Echtzeitfähigkeit mindestens 10 zusammengefügte Einzelbilder pro Sekunde bei Verwendung eines handelsüblichen PCs verstanden werden.

Bezüglich weiteren Details, die bei dem Stitching-Verfahren zum Einsatz kommen, sei auf die Patentschrift DE 10 2009 039 251 A1 bzw. die WO 2011/023657 A1 verwiesen. Vorteilhafterweise kann entsprechend Ausführungsbeispielen das angewendete Stitching-Verfahren, wie in [2] und [3] erweitert werden. Diese Aspekte beziehen sich insbesondere auf die Echtzeitverarbeitung und inkrementellen Erstellung eines Panoramas mit den Basisschritten:
- Entzerrung der Bilder und Detektion unbrauchbarer Bildbereiche (z. B. Glanzlichter);
- Merkmalbasierte Registrierung benachbarter Frames;
- Robuste Schätzung der Transformationen zwischen den Frames mit RANSAC; und
- Platzierung der Einzelbilder in auf einer Ebene.

Des Weiteren wird in [3] beschrieben vor allem der Umgang mit einem "Abreißen" des Mosaickingprozesses (z. B. wenn aufgrund von schlechter Bildqualität die Registrierung fehlschlägt) beschrieben. Die Lösung besteht in der Erstellung von Teil-Panoramen (Sub-Maps), die im besten Falle zu einem späteren Zeitpunkt zu einem Gesamtpanorama zusammengesetzt werden können, wenn Verbindungen durch erneutes "Scannen" der entsprechenden Bereiche erzeugt wurden. Des Weiteren sei auf [1] verwiesen.

Bevorzugte Anwendungsgebiete des beschrieben Verfahrens sind:
- Dokumentation: Bildbasierte Dokumentation großer Zusammenhängender Präparatsflächen in Pathologiemanagement, LIS und PACS-Systemen mit niedriger Einstiegshürde. Integration als "Plugin" in bestehende oder Ergänzung als eigene Softwarelösung(en).
- Telepathologie: Gerade in "low-income"-Ländern sind Slidescanner aus Kostengründen nicht anzutreffen. Digitale Einzelbilder, die auf Telepathologieplattformen für Zweitmeinungen ein gesandt oder übertragen werden, zeigen häufig nicht den richtigen Bildausschnitt. Größere Bildpanoramen, die mit dieser Erfindung interaktiv erzeugt werden, erlauben eine effektivere Telediagnostik und können durch Standardbildformate leicht integriert werden.
- Automatische und Semiautomatische Analysen: Quantifizierung von Markern, z.B. Ki67 in Gewebeschnitten, werden bislang nur in Zusammenhang mit teuren Slidescannern durchgeführt, da dort i.d.R. größere Bereiche eines (histologischen) Präparates erfasst und ausgezählt werden. Mit dieser Erfindung könnten genügend zusammenhängende Bereiche digitalisiert und derartige Analysen interaktiv auch mit einfachen Mikroskoparbeitsplätzen durchgeführt werden, und eröffnen so einen neuen Markt für Analysesoftware.

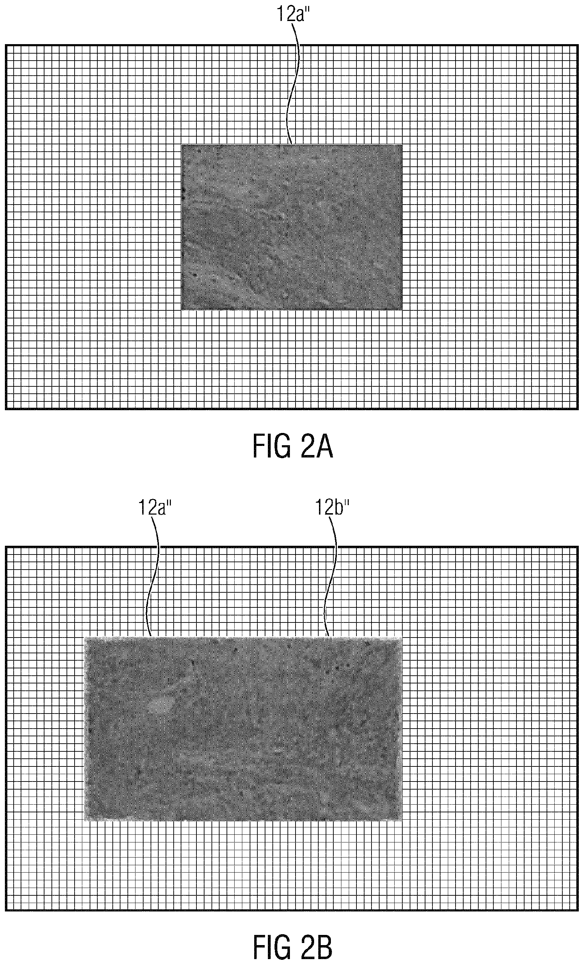

Das beschriebene Verfahren kann auch dahin gehend erweitert werden, dass mehr als zwei Mikroskopieaufnahmen miteinander verbunden werden, wie nachfolgend anhand von Fig. 2a-2f erläutert wird. Fig. 2a zeigt die erste Aufnahme 12a", wobei noch kein Stitching gestartet ist, so dass hier nur ein einzelnes Bild dargestellt wird. Dieses einzelne Bild ist im Live-Bildmodus aufgenommen. Fig. 2b zeigt das Stitching nach den ersten beiden Bildern, hier den Aufnahmen 12a" und 12b", das mittig im Live-Modus illustriert ist. Hierin ist zu erkennen, dass es sich um eine Bewegung nach rechts handelt, so dass das Panorama nach links verschoben wird.

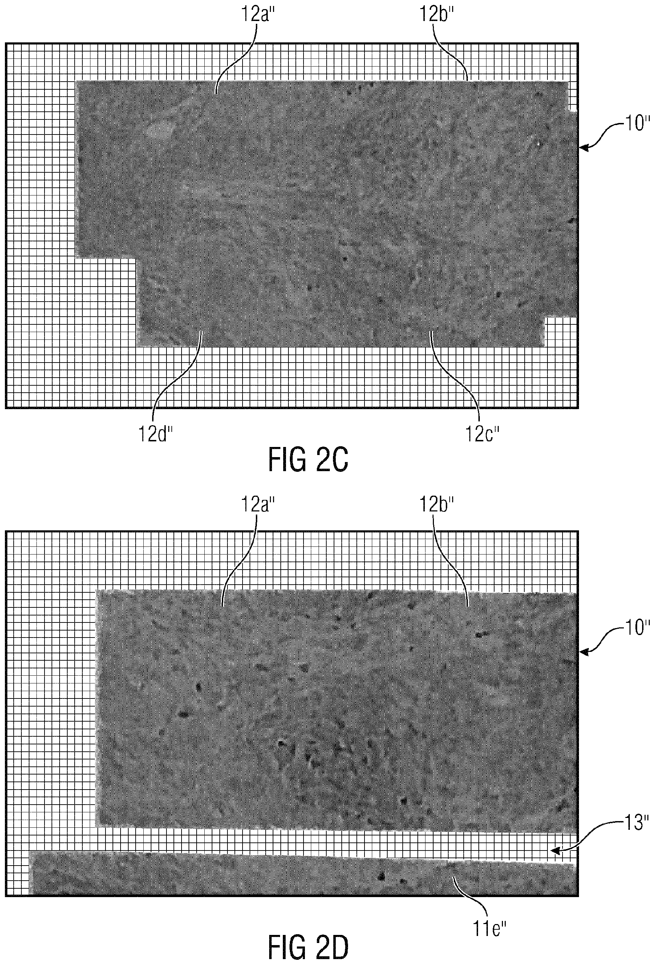

In Fig. 2c ist die Mikroskopiepanoramadarstellung 10 umfassend die ersten Aufnahmen 12a" und 12b" durch Hinzufügen von weiteren Bildern 12c" und 12d" nach unten vervollständigt.

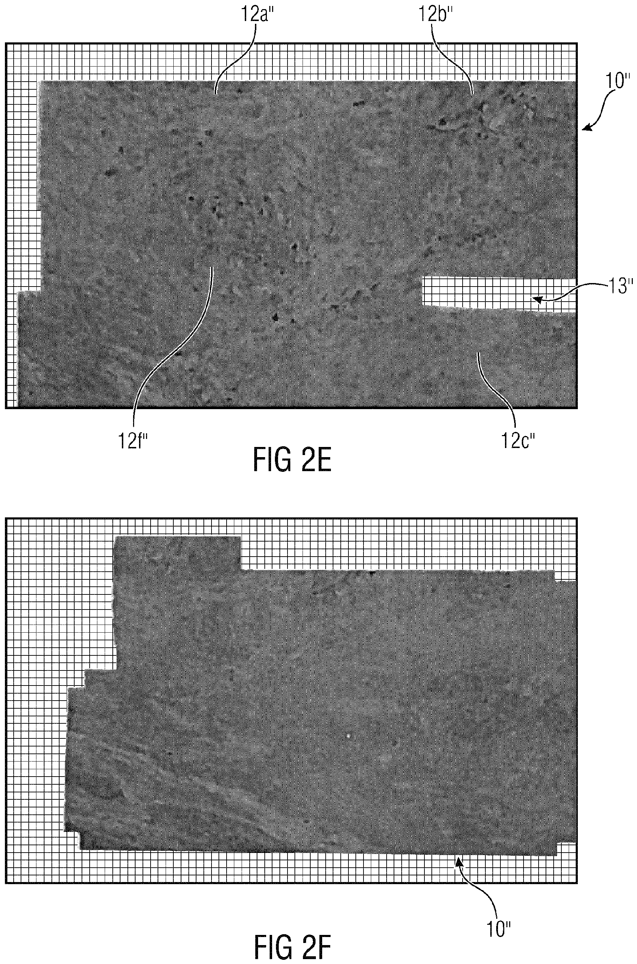

Wie anhand von Fig. 2d dargestellt ist, kann es durch schnellen lateralen Versatz dazu kommen, dass eine Lücke (vgl. Bezugszeichen 13") zwischen den Bereichen 12a" plus 12b" und 12e" entsteht. Diese Lücke wird, wie anhand von Fig. 2e illustriert, durch die weitere Aufnahme 12f" geschlossen. An dieser Stelle sei angemerkt, dass eine derartige Lücke 13" beim Offlinestitching erst auffallen würde, wenn das gesamte Panorama erzeugt wird und die Probe längst nicht mehr im Mikroskop verfügbar ist, so dass keine Korrektur erfolgen kann. Um das Schließen also sicherzustellen, ist das Echtzeitstitching die bevorzugte Variante. Das Ergebnis, nämlich die Mikroskopiepanoramadarstellung 10" ist in Fig. 2f dargestellt. Hierbei kann nun in einzelnen Bereichen gezoomt werden, innerhalb der virtuellen Slides hin und her navigiert werden, wie es beispielsweise auch bei Google Maps unter Zuhilfenahme der Maus möglich ist. Die Gesamtpanoramadarstellung 10" kann als Bild, wie z. B. als JPEG oder Tiff oder auch in anderen Formaten, die beispielsweise mehrere Bildebenen ermöglichen, gespeichert werden.

Wie oben bereits erläutert, ist es im Gegensatz zur üblichen Nutzung von Bildpanoramen, z. B. In der Fotographie, um Landschaftspanoramen aufzunehmen oder auch bei der im Bereich der Endoskopie vorgeschlagenen Lösung, ist die Fokussierung in der Mikroskopie wichtig aufgrund der geringen Schärfentiefe der Mikroskopie-Objektive.

Das bedeutet, dass während der Aufnahme des Bildpanoramas, die durch Verstellung der Bühne mit dem Positionierer in XY-Richtung erfolgt, auch Korrekturen in der Z-Richtung (Fokussierung) erforderlich sein können. D. h., dass z. B. an einer bestimmten XY-Position ein "Stapel" von Bildern in verschiedenen Z-Positionen aufgenommen wird, bis der Benutzer ein scharfes Bild eingestellt hat.

Hierzu gibt es drei verschiedene Varianten, die nachfolgend erläutert werden, wobei insbesondere die einzelnen Schritte in der entsprechenden Reihenfolge aufgezählt werden.

Die erste Erweiterung bezieht sich auf den Autofokus. Hierbei sind die Schritte:
- Wenn an einer Position XY schon eine Bildkachel in das Panorama eingefügt wurde und ein neues Bild aufgenommen wird;
- Bestimmung eines Schärfemaßes für beide Bilder B; und
- Einfügen des Bildes in das Panorama für welches das Schärfemaß höher ist.

Es sei angemerkt, dass Einfügen in diesem Kontext bzw. auch allgemein sowohl "Ersetzen" als auch additives / paralleles "Speichern" in einer weiteren Speicherungsebenen im Sinne von Hinzufügen bedeuten kann.

Eine weitere Variante kann sich auf den sogenannten Extended Depth of Focus (erweiterte Tiefe bei der Fokussierung) beziehen. Dieser umfasst die Schritte:
Für neu aufgenommene Bilder wird die Schnittmenge mit dem Panorama bestimmt;
- Die "schärferen", d. h. besser fokussierten Bildbereiche werden in das Panorama übernommen;
- Hierfür Nutzung von aus dem Stand der Technik bekannten "Extended depth of focus" Verfahren; und
- D. h., dass entsprechend Ausführungsbeispielen für kleine Umgebungen innerhalb dieser überlappenden Bildbereiche ein lokales Schärfemaß bestimmt wird und der jeweils schärfere Bildbereich in das resultierende Panorama übertragen wird.

Eine weitere Variante, die entsprechend bevorzugten Ausführungsbeispielen zum Einsatz kommt, ist die sogenannte Z-Stapel-Speicherung. Die Z-Stapel-Speicherung umfasst zur Speicherung der mehreren Speicherebenen die Schritte:
- Speicherung aller eingehenden Bilder und Positionierung im Panorama über eine entsprechende Datenverwaltung. Nicht "flach" als Bild;
- Hierdurch beim späteren Betrachtung noch die Möglichkeit "manuell" zu fokussieren. Dieses Feature ist z.B. in der Zytologie und Hämatologie interessant, wo bei speziellen (auffälligen Zellen) ein Fokus-Stapel für einzelne Zellen aufgenommen wird; und
- Für lokale z-Stapel an einer Position bestimmt das Bild mit dem höchsten Schärfemaß die "Ebene 0" über die benachbarte Bildkacheln zueinander synchronisiert werden.

Im Ergebnis werden z.B. also die mehreren Aufnahmen mit den teilweise oder vollständig überlappenden Ausschnitten als mehrere einzelne Bilddateien gespeichert, wobei die Beziehung der mehreren Aufnahmen (ggf. auch separat z.B. als XML-Datei) abgelegt wird.

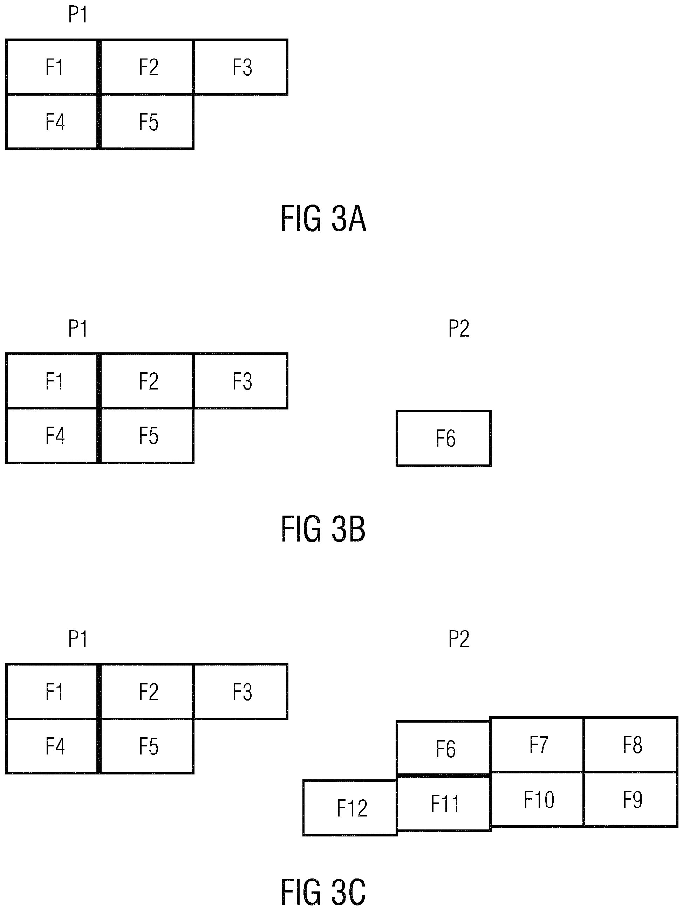

Wie oben bereits im Rahmen von Fig. 2d und 2e erläutert, kann es z. B. infolge von sehr schnellen Bewegungen des Mikroskoptisches beim Navigieren durch den Benutzer dazu kommen, dass keine Überlappungen zweier aufeinanderfolgender Kamerabilder bestehen (insbesondere bei geringen Frameraten). Die genaue Prozedur in einem derartigen Fall wird nachfolgend anhand der Fig. 3a-3e erläutert.

Hierbei wird von dem in Fig. 3a dargestellten Fall ausgegangen, dass ein erstes Bildpanorama P1 umfassend die Frames F1-F5 aufgenommen ist, wobei dann in einem weiteren Frame ein weiteres Panorama P2 aufgenommen wird, wie in fig. 3b illustriert. Das neue Frame F6 überlappt sich nicht mit einem der alten Frames F1-F5.

Ausgehend von dem neuen Frame F6 werden nun weitere Frames F7-F12 angrenzend zu dem Frame F6 in der Panoramadarstellung P2 aufgenommen (Fig. 3c).

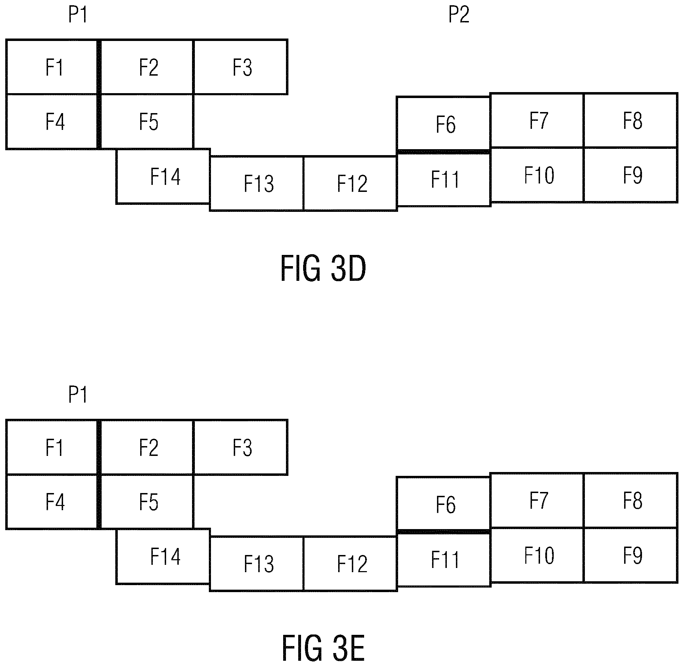

In einem parallelen Hintergrundprozess kann anhand von Bildmerkmalen ganz analog zum Stitching ein neuer Frame in ein Panorama hinein, kontinuierlich testen, ob zwei Panoramen P1 und P2 zusammenwachsen, wie anhand von Fig. 3d illustriert ist. Diese werden dann in der Art fusioniert, dass nun nur noch das Panorama P1 existiert (vgl. Fig. 3e). Alternativ dazu kann dem Benutzer eine Liste von N Panoramen P1 ....PN ausgegeben werden, die bis dato noch nicht fusioniert worden sind.

Entsprechend eines weiteren Ausführungsbeispiels kann, wie oben bereits angedeutet, die Objektivumschaltung detektiert werden. Beim Umschalten von Objektiven wird eine Bildsequenz, bestehend aus mehreren Bildern oder auch aus einem einzelnen Bild, teilweise oder komplett von einer schwarzen Region überdeckt. Diese schwarze Fläche entsteht wenn ein Objektivrevolver den Lichtstrahlengang hindert welches auf die Kamera eintrifft. Eigenschaften einer Bildsequenz beim Objektivwechsel:
- Große homogen schwarze (dunkle) Flächen an den Bildrändern
- Runde Geometrie (Objektive/Linsekante)
- Steigende und danach abfallende Flächengröße der verdeckten Region(-en)

Anhand dieser Merkmale kann der Objektivwechsel beispielsweise mittels Schwellwertverfahren und Blobfindung automatisch detektiert werden. Für den Fall, dass es sich um ein Zoomobjektiv oder Wechselobjektiv handelt, kann der Vergrößerungsfaktor auch alternativ bestimmt werden. Beispielsweise kann nach dem Objektivwechsel sichergestellt werden, welches der Objektive gerade aktiv ist. Dieser Schritt ist erforderlich aufgrund folgender Szenarien:
- Objektiv wird normal gewechselt
- Objektiv wird mehrfach gewechselt (z. B. der Objektivrevolver hat 3 Objektive mit 10x-, 20x-, 40x-Vergrößerung. Es wird von der Position 1 zur Position 3 im Uhrzeigersinn und/oder gegen Uhrzeigersinn gewechselt)
- Objektiv wird mehrmals gewechselt und kommt in die Ursprungsposition zurück.

Diese Szenarien werden grundsätzlich mittels eines Registrierungsverfahrens abgedeckt, beispielsweise in dem entsprechend der vorhandenen Objektive skalierte Teilbilder mit dem Panorama registriert werden. Für die Registrierung wird das bestfokussierte Bild vor und nach Objektivwechsel in das Panorama ein gepasst.

Als Ergebnis werden die Bilder mit höherer Vergrößerung in der Slide-Übersicht als Thumbnails oder durch einen Rahmen graphisch visualisiert. Hierdurch können sehr einfach mit mehreren Einzelbildern diagnostisch relevante Einzelbilder hoher Auflösung in den anatomischen Kontext, in einem Bild bzw. Panorama geringerer Auflösung lokalisiert werden (vgl. Fig. 1c).

Um ein in sich stimmiges Gesamtpanorama zu erzeugen, genügt es teilweise nicht, ausschließlich sukzessive einander folgende Bilder zusammen zusetzen. Dadurch entsteht mit der Zeit ein sich akkumulierender Fehler, der insbesondere dann deutlich wird, wenn ein schon einmal aufgenommener Bereich des Objektträgers wiederholt angefahren wird, also ein "Schleifenschluss" stattfindet. Dieser Schleifenschluss wird entsprechend Ausführungsbeispielen vom Stitchingverfahren erkannt und entsprechend behandelt werden. Im Fachgebiet der Robotik wird dieses Verfahren als "Loop Closing" bezeichnet uns insbesondere bei der Kartierung angewandt [4]. Für das Live-Stitching in der Mikroskopie wenden wir das Loop Closing folgendermaßen an:
- Ermitteln, ob es einen Überlapp zwischen neuestem Frame und allen Frames oder einer Auswahl an Vorgänger-Frames vorliegt.
- Bei detektiertem Überlapp, führe Registrierung mit diesen Frames durch.
- Optimiere die Positionen der Frames im Panorama so, dass ein globales Fehlermaß (welches alle Registrierungsergebnisse berücksichtigt) minimiert wird. Z. B. Minimierung des Rück-Projektionsfehlers mit Levenberg-Marquardt-Algorithmus.

Entsprechend weiteren Ausführungsbeispielen kann das in Bezug auf Fig. 1a und hierbei insbesondere in Bezug auf den Schritt 112 erläuterte Stitchingverfahren auch multimodal ausgeführt werden. Wenn das Kamera-System über mehrere Beleuchtungsmodalitäten (Weißlicht, Phasenkontrast, Fluoreszenz) verfügt, und das Präparat geeignet mit Fluoreszenzfarbstoffen gefärbt wurde, werden diese durch Fluoreszenzbeleuchtung angeregt und durch geeignete Fluoreszenzfilter sichtbar gemacht. Für jeden FL-Farbstoff (sowie im Durchlicht oder PK) wird das Präparat erneut betrachtet bzw. unter dem Okular verschoben. Durch geeignete Datenstrukturen werden die zueinander registrierten Bilder in mehrere übereinanderliegende Panoramen mit unterschiedlichen Färbungen zur Deckung gebracht. Abweichend von den o.g. Verfahren zur Registrierung von Endoskopbildern oder histologischen Durchlichtbildern, werden bei der Registrierung von FL-Bildern auch andere Verfahren wie z. B. Spektraltechniken mit Registrierung im Fourierraum bzw. Mutual information genutzt.

Entsprechend weiteren Ausführungsbeispielen kommt die sogenannte interaktive Annotation zum Einsatz. In den großen Bildpanoramen müssen Auffällige Bereiche, Zellen, etc. wieder gefunden werden. Durch eine Digitale Annotation von interessanten Positionen der Panoramen und der Verknüpfung dieser Positionen mit MetaDaten (andern Bildern, URL, anderen Dokumenten) ist ein Anreicherung und Verknüpfung der Panoramen mit weiteren (externen) Informationen möglich.

Auch wenn obige Ausführungsbeispiele im Zusammenhang mit einem Verfahren erläutert wurden, sei darauf hingewiesen, dass weitere Ausführungsbeispiele sich auf eine entsprechende Vorrichtung beziehen, die dazu ausgebildet ist, eine Mikroskopiepanoramadarstellung ausgehend von mindestens zwei Mikroskopieaufnahmen zu erstellen, wobei sich die zwei Mikroskopieaufnahmen durch eine Veränderung der Perspektive in z-Richtung unterscheiden. Diese Vorrichtung ist in Fig. 4, welche das System 50 illustriert, gezeigt und mit dem Bezugszeichen 20 versehen. Die Vorrichtung umfasst in der Basisvariante zumindest eine Schnittstelle zum Empfangen der Mikroskopieaufnahmen sowie einen Prozessor zur Analyse bzw. zum Vergleich der empfangenen Mikroskopieaufnahmen und zum Zusammenfügen derselben.

Weitere Ausführungsbeispiele beziehen sich auf das in Fig. 4 dargestellte System 50 umfassend die Vorrichtung 20, zumindest eine Kamera 17 sowie das Mikroskop 19. Das Mikroskop 19 umfasst den Positionierer 19o für das Objekt 11.

Der Positionierer bzw. die die Positionierungseinheit 19o kann beispielsweise ein Halter für einen Objektträger, wie zum Beispiel eine Klemme oder eine verschiebbare Plattform (des Mikroskops), die auch als XY-Tisch mit Z-Versteller bezeichnet werden kann, sein. Im einfachsten Fall kann die Positionierungseinheit 19o auch der Tisch selbst sein, auf welchem sich das zu untersuchende Objekt 11 befindet.
Auch wenn das obige System 50 bzw. die obige Vorrichtung 20 und auch das Verfahren 100 insbesondere im Zusammenhang mit der Untersuchung von medizinischer Mikroskopie erläutert werden, so sei darauf hingewiesen, dass diese Ausführungsbeispiele gleichermaßen auf andere Anwendungen, z. B. technische Mikroskopie wie z. B. die Analyse metallischer und mineralischer bzw. steinerner Oberflächen (Schliffbilder) z.B. in der Materialforschung und Qualitätssicherung anwendbar ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer DVD, einer Bluray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literaturangaben

[1] T. Bergen und T Wittenberg, "Stitching and Surface Reconstruction from Endoscopic Image Sequences: A Review of Applications and Methods", IEEE Journal of Biomedicaland Health Informatics, Bd. PP, Nr. 99, 5. 1-1, 2014.
[2] T. Bergen, S. Ruthotto, C. Münzenmayer, S. Rupp, 0. Paulus, und C Winter, "Featurebased real-time endoscopic mosaicking", in Image and Signal Processing and Analysis, 2009. ISPA 2009. Proceedings of 6th International Symposium on, 2009, 5. 695-700.
[3] T. Bergen, T. Wittenberg, C. Münzenmayer, C. C. G. Chen, und G. D. Hager, "A graphbased approach for local and global panorama imaging in cystoscopy", in Proc. of SPIE Vol, 2073, Bd. 8671, 5. 86771K-1.
[4] B. W/I/iams, M, Cummins, J. Ne/ta, P. Newman, 1. Reid, und J. Tardös, "A comparison of loop closing techniques in monocular SLAM' Robotics and Autonomous Systems, Bd. 57, Nr. 12, 5. 1188-; 197, 2009.

## Patentansprüche

1. Verfahren (100) zur Erstellung einer Mikroskopiepanoramadarstellung (10, 10') einer dreidimensionalen Probe mit flacher Ausdehnung in x und y Richtung mit folgenden Schritten:
a) Anordnen (102) der dreidimensionalen Probe (11) auf einen Positionierer (190);
b) Aufnehmen (104) der Probe (11) mittels einer Bilderfassungsvorrichtung (17), um eine erste Mikroskopieaufnahme (12a, 12a', 12a") der Probe (11) mit einem ersten Ausschnitt zu erhalten;
c) Ändern (106) der Perspektive auf die zweidimensionale Probe (11) in z-Richtung, wobei eine Veränderung in z-Richtung eine Veränderung eines Vergrößerungsfaktors umfasst;
d) Aufnehmen (108) der Probe (11) mittels der Bilderfassungsvorrichtung, um eine zweite Mikroskopieaufnahme (12b, 12b', 12b") der Probe (11) mit einem zweiten Ausschnitt zu erhalten;
e) Ermitteln (110) einer Veränderungsinformation, die einen Rückschluss auf die Veränderung der Perspektive in z-Richtung zulässt, anhand eines Unterschieds zwischen der ersten und der zweiten Mikroskopieaufnahme (12a, 12a', 12a", 12b, 12b', 12b"); und
f) Zusammenfügen (112) der ersten und der zweiten Mikroskopieaufnahme (12a, 12a', 12a" 12b, 12b', 12b") unter Berücksichtigung der Veränderungsinformation, um die Mikroskopiepanoramadarstellung (10, 10') zu erhalten;
wobei sich die erste und die zweite Mikroskopieaufnahme (12a, 12a', 12a", 12b, 12b', 12b") oder ein Bereich der ersten Mikroskopieaufnahme und ein Bereich der zweiten Mikroskopieaufnahme (12a, 12a', 12a", 12b, 12b', 12b") in Bezug auf einen Vergrößerungsfaktor unterscheiden und
wobei das Verfahren (100) den Schritt des Einfügens der ersten oder der zweiten Mikroskopieaufnahme (12a, 12a', 12a", 12b, 12b', 12b") in die Mikroskopiepanoramadarstellung (10, 10') oder des Einfügens des Bereichs der ersten Mikroskopieaufnahme (12a, 12a', 12a") oder des Einfügens des Bereichs der zweiten Mikroskopieaufnahme (12b, 12b', 12b") in die Mikroskopiepanoramadarstellung (10, 10') umfasst, und wobei diejenige Mikroskopieaufnahme (12a, 12a', 12a",12b, 12b', 12b") oder derjenige Bereich der Mikroskopieaufnahme (12a, 12a', 12a",12b, 12b', 12b") eingefügt wird, der den größeren Vergrößerungsfaktor aufweist;
wobei das Verfahren (100) den Schritt des Detektierens eines Objektivwechsels mittels Schwellwertverfahren und Blobfindung aufweist, um den Vergrößerungsfaktor zu bestimmen; oder wobei das Verfahren (100) den Schritt des Bestimmens des Vergrößerungsfaktors anhand von registrierbaren Bereichen in einen überlappenden Ausschnitt der ersten und der zweiten Mikroskopieaufnahme (12b, 12b', 12b") aufweist.

2. Verfahren (100) gemäß Anspruch 1, wobei der erste Ausschnitt und der zweite Ausschnitt zumindest teilweise überlappend sind, so dass die erste und die zweite Mikroskopieaufnahme (12a, 12a', 12a", 12b, 12b', 12b") zumindest partiell hinsichtlich eines Übereinstimmungsbereichs übereinstimmen,
wobei beim Zusammenfügen die erste und die zweite Mikroskopieaufnahme (12a, 12a', 12a", 12b, 12b', 12b") in dem Übereinstimmungsbereich für die Mikroskopiepanoramadarstellung (10, 10') registriert werden.

3. Verfahren (100) gemäß einem der vorhergehenden Ansprüche, wobei sich die erste und die zweite Mikroskopieaufnahme (12a, 12a', 12a", 12b, 12b', 12b") oder
wobei sich ein Bereich der ersten Mikroskopieaufnahme (12a, 12a', 12a") und ein Bereich der zweiten Mikroskopieaufnahme (12b, 12b', 12b") in Bezug auf eine Fokussierung und/oder eine Schärfe unterscheiden, und
wobei das Verfahren (100) den Schritt des Einfügens der ersten oder der zweiten Mikroskopieaufnahme (12a, 12a', 12a", 12b, 12b', 12b") in die Mikroskopiepanoramadarstellung (10, 10') oder des Einfügens des Bereichs der ersten Mikroskopieaufnahme (12a, 12a', 12a") oder des Bereichs der zweiten Mikroskopieaufnahme (12b, 12b', 12b") in die Mikroskopiepanoramadarstellung (10, 10') umfasst,
wobei diejenige Mikroskopieaufnahme (12a, 12a', 12a", 12b, 12b', 12b") oder derjenige Bereich der Mikroskopieaufnahme (12a, 12a', 12a", 12b, 12b', 12b") eingefügt wird, der ein größtes relatives Schärfemaß aufweist.

4. Verfahren (100) gemäß Anspruch 3, wobei das Verfahren (100) den Schritt des Bestimmens eines globalen oder bereichsweisen Schärfemaßes je Mikroskopieaufnahme (12a, 12a', 12a") oder je Bereich einer Mikroskopieaufnahme (12a, 12a', 12a") aufweist.

5. Verfahren (100) gemäß Anspruch 4, wobei das Bestimmen des Schärfemaßes derart bestimmt wird, dass in einem überlappenden Bereich der ersten und der zweiten Mikroskopieaufnahme (12a, 12a', 12a") für jede Mikroskopieaufnahme (12a, 12a', 12a", 12b, 12b', 12b") ein lokales Schärfemaß bestimmt wird und die bestimmten Schärfemaße miteinander verglichen werden.

6. Verfahren (100) gemäß einem der vorherigen Ansprüche, wobei die Mikroskopiepanoramadarstellung (10, 10') in dem eingefügten Bereich eine erhöhte Auflösung aufweist.

7. Verfahren (100) gemäß einem der Ansprüche 1 bis 6, wobei die Mikroskopiepanoramadarstellung (10, 10') Bereiche aufweist, zu denen mehrere Speicherungsebenen vorliegen, die sich im Hinblick auf Auflösung, Fokus und/oder Schärfe unterscheiden.

8. Verfahren (100) gemäß einem der Ansprüche 3 bis 7, wobei sich die erste und zweite Mikroskopieaufnahme (12a, 12a', 12a", 12b, 12b', 12b"), welche in der Mikroskopiepanoramadarstellung (10, 10') zusammengefügt sind, oder die Bereiche der ersten und zweiten Mikroskopieaufnahme (12a, 12a', 12a",12b, 12b', 12b"), die in die Mikroskopiepanoramadarstellung (10, 10') eingefügt sind, in der z-Richtung unterscheiden.

9. Verfahren (100) gemäß einem der vorhergehenden Ansprüche, wobei das Verfahren (100) den Schritt des lateralen Verschiebens der Probe (11) in x- und/oder y-Richtung umfasst, so dass sich die erste und zweite Mikroskopieaufnahme (12a, 12a', 12a", 12b, 12b', 12b") oder die Bereiche der ersten und zweiten Mikroskopieaufnahme (12a, 12a', 12a", 12b, 12b', 12b"), die in die Mikroskopiepanoramadarstellung (10, 10') eingefügt sind, im Hinblick auf die x- und/oder y-Perspektive unterscheidet.

10. Verfahren (100) gemäß Anspruch 9, wobei das Verfahren (100) den Schritt des Ermittelns eines Bewegungsvektors, der die laterale Verschiebung in x- und/oder y-Richtung beschreibt, aufweist, und wobei der Bewegungsvektor anhand einer Veränderung eines Merkmals in der ersten und der zweiten Mikroskopieaufnahme (12a, 12a', 12a", 12b, 12b', 12b") bestimmt wird.

11. Verfahren (100) gemäß einem der Ansprüche 9 oder 10, wobei der erste und der zweite Ausschnitt nicht direkt aneinander angrenzend sind.

12. Verfahren (100) gemäß Anspruch 11, wobei das Verfahren (100) den Schritt des Aufnehmens der Probe (11) mittels der Bilderfassungsvorrichtung (17) aufweist, um eine oder mehrere dritte Mikroskopieaufnahmen der Probe (11) mit einem oder mehreren dritten Ausschnitten zu erhalten, der den ersten und den zweiten Ausschnitt verbindet.

13. Verfahren (100) gemäß einem der vorhergehenden Ansprüche, wobei das Verfahren (100) den Schritt des Optimierens der Position der ersten Mikroskopieaufnahme (12a, 12a', 12a") und der zweiten Mikroskopieaufnahme (12b, 12b', 12b") und von weiteren Mikroskopieaufnahmen zueinander umfasst, wobei das Optimieren derart durchgeführt wird, dass ein Fehler bei der Anordnung der ersten, der zweiten und der weiteren Mikroskopieaufnahme (12a, 12a', 12a", 12b, 12b', 12b") zueinander minimiert wird.

14. Verfahren (100) gemäß einem der vorhergehenden Ansprüche, wobei die Schritte a) und b) sowie d) bis f) für zumindest zwei unterschiedliche Modi wiederholt werden.

15. Verfahren (100) gemäß Anspruch 14, wobei die zumindest zwei Modi aus der Gruppe umfassend Weisslicht, Phasenkontrast, Fluoreszenz, Dunkelfeld, Hellfeld stammen.

16. Verfahren (100) gemäß einem der vorhergehenden Ansprüche, wobei das Verfahren (100) den Schritt des interaktiven Hervorhebens eines Bereichs, der sich im Hinblick auf Auflösung, Fokus und/oder Schärfe unterscheidet, umfasst.

17. Verfahren (100) gemäß einem der vorhergehenden Ansprüche, wobei die Veränderung der Perspektive in z-Richtung eine Veränderung der Schärfentiefe umfasst.

18. Computerprogramm mit einem Programmcode zur Durchführung des Verfahrens nach einem der vorhergehenden Ansprüche, wenn das Programm auf einem Computer abläuft.

19. Vorrichtung (20) zum Erstellen einer Mikroskopiepanoramadarstellung (10, 10') einer dreidimensionalen Probe (11) mit flacher Ausdehnung in x und y Richtung, mit folgenden Merkmalen:
einer Schnittstelle zum Empfangen einer ersten Mikroskopieaufnahme (12a, 12a', 12a") der Probe (11) mit einem ersten Ausschnitt und einer zweiten Mikroskopieaufnahme (12b, 12b', 12b") mit einem zweiten Ausschnitt, wobei die erste Mikroskopieaufnahme (12a, 12a', 12a") und die zweite Mikroskopieaufnahme (12b, 12b', 12b") sich im Hinblick auf die Perspektive in z-Richtung unterscheiden; und einer Berechnungseinheit, die ausgebildet ist, eine Veränderungsinformation, die einen Rückschluss auf die Veränderung der Perspektive in z-Richtung zulässt, anhand eines Unterschieds zwischen der ersten und der zweiten Mikroskopieaufnahme (12a, 12a', 12a", 12b, 12b', 12b") zu ermitteln und die erste und die zweite Mikroskopieaufnahme (12a, 12a', 12a", 12b, 12b', 12b") unter Berücksichtigung der Veränderungsinformation zusammenzufügen, um eine Mikroskopiepanoramadarstellung (10, 10') zu erhalten;
wobei sich die erste und die zweite Mikroskopieaufnahme (12a, 12a', 12a", 12b, 12b', 12b") oder ein Bereich der ersten und ein Bereich der zweiten Mikroskopieaufnahme (12a, 12a', 12a", 12b, 12b', 12b") in Bezug auf einen Vergrößerungsfaktor unterscheiden und
wobei die Berechnungseinheit ausgebildet ist, ein Einfügen der ersten oder der zweiten Mikroskopieaufnahme (12a, 12a', 12a", 12b, 12b', 12b") in die Mikroskopiepanoramadarstellung (10, 10') oder des Bereichs der ersten Mikroskopieaufnahme (12a, 12a', 12a") oder ein Einfügen des Bereichs der zweiten Mikroskopieaufnahme (12b, 12b', 12b") in die Mikroskopiepanoramadarstellung (10, 10') durchzuführen, und wobei diejenige Mikroskopieaufnahme (12a, 12a', 12a",12b, 12b', 12b") oder derjenige Bereich der Mikroskopieaufnahme (12a, 12a', 12a", 12b, 12b', 12b") eingefügt wird, der den größeren Vergrößerungsfaktor aufweist;
wobei die Berechnungseinheit ausgebildet ist, ein Detektieren eines Objektivwechsels mittels Schwellwertverfahren und Blobfindung durchzuführen, um den Vergrößerungsfaktor zu bestimmen; oder ein Bestimmen des Vergrößerungsfaktors anhand von registrierbaren Bereichen in einen überlappenden Ausschnitt der ersten und der zweiten Mikroskopieaufnahme (12b, 12b', 12b") durchzuführen.

20. System umfassend ein Mikroskop (19) und eine Vorrichtung (20) nach Anspruch 19.

## Claims

1. A method (100) for generating a microscopy panoramic representation (10, 10') of a three-dimensional sample having a lateral extension in the x and y directions, comprising the steps of:
a) arranging (102) the three-dimensional sample (11) on a positioner (190);
b) recording (104) the sample (11) by means of an imaging device (17) in order to obtain a first microscopy picture (12a, 12a', 12a") of the sample (11) having a first section;
c) altering (106) the perspective onto the two-dimensional sample (11) in the z direction, wherein an alteration in the z direction comprises an alteration of the magnification factor;
d) recording (108) the sample (11) by means of the imaging device in order to obtain a second microscopy picture (12b, 12b', 12b") of the sample (11) having a second section;
e) determining (110) change information which allows drawing conclusions as to the change in perspective in the z direction, using a difference between the first and second microscopy pictures (12a, 12a', 12a", 12b, 12b', 12b"); and
f) merging (112) the first and second microscopy pictures (12a, 12a', 12a", 12b, 12b', 12b") while considering the change information in order to obtain the microscopy panoramic representation (10, 10');
wherein the first and second microscopy pictures (12a, 12a', 12a", 12b, 12b', 12b") or a region of the first microscopy picture and a region of the second microscopy picture (12a, 12a', 12a", 12b, 12b', 12b") differ as regards a magnification factor, and
wherein the method (100) comprises the step of inserting the first or second microscopy picture (12a, 12a', 12a", 12b, 12b', 12b") into the microscopy panoramic representation (10, 10') or of inserting the region of the first microscopy picture (12a, 12a', 12a") or of inserting the region of the second microscopy picture (12b, 12b', 12b") into the microscopy panoramic representation (10, 10'), and wherein that microscopy picture (12a, 12a', 12a", 12b, 12b', 12b") or that region of the microscopy picture (12a, 12a', 12a", 12b, 12b', 12b") comprising the greater magnification factor will be introduced;
wherein the method (100) comprises the step of detecting a change in objective by means of a threshold value method and blob finding in order to determine the magnification factor; or wherein the method (100) comprises the step of determining the magnification factor using registerable regions in an overlapping section of the first and second microscopy pictures (12b, 12b', 12b").

2. The method (100) in accordance with claim 1, wherein the first section and the second section are at least partly overlapping such that the first and second microscopy pictures (12a, 12a', 12a", 12b, 12b', 12b") match at least partly as regards a match region,
wherein, when merging, the first and second microscopy pictures (12a, 12a', 12a", 12b, 12b', 12b") in the match region are registered for the microscopy panoramic representation (10, 10').

3. The method (100) in accordance with any of the preceding claims, wherein the first and second microscopy pictures (12a, 12a', 12a", 12b, 12b', 12b") or a region of the first microscopy picture (12a, 12a', 12a") and a region of the second microscopy picture (12b, 12b', 12b") differ as regards focusing and/or sharpness, and
wherein the method (100) comprises the step of inserting the first or second microscopy picture (12a, 12a', 12a", 12b, 12b', 12b") into the microscopy panoramic representation (10, 10') or of inserting the region of the first microscopy picture (12a, 12a', 12a") or the region of the second microscopy picture (12b, 12b', 12b") into the microscopy panoramic representation (10, 10'), wherein that microscopy picture (12a, 12a', 12a", 12b, 12b', 12b") or that region of the microscopy picture (12a, 12a', 12a", 12b, 12b', 12b") comprising a greatest relative measure of sharpness will be introduced.

4. The method (100) in accordance with claim 3, wherein the method (100) comprises the step of determining a global or regional measure of sharpness per microscopy picture (12a, 12a', 12a") or per region of a microscopy picture (12a, 12a', 12a").

5. The method (100) in accordance with claim 4, wherein determining the measure of sharpness is determined such that a local measure of sharpness is determined in an overlapping region of the first and second microscopy pictures (12a, 12a', 12a") for each microscopy picture (12a, 12a', 12a", 12b, 12b', 12b") and the measures of sharpness determined are compared to one another.

6. The method (100) in accordance with any of the preceding claims, wherein the microscopy panoramic representation (10, 10') comprises an increased resolution in the inserted region.

7. The method (100) in accordance with any of claims 1 to 6, wherein the microscopy panoramic representation (10, 10') comprises regions for which there are several storage planes which differ as regards resolution, focus and/or sharpness.

8. The method (100) in accordance with any of claims 3 to 7, wherein the first and second microscopy pictures (12a, 12a', 12a", 12b, 12b', 12b") which are merged in the microscopy panoramic representation (10, 10'), or the regions of the first and second microscopy pictures (12a, 12a', 12a", 12b, 12b', 12b") which are inserted into the microscopy panoramic representation (10, 10') differ in the z direction.

9. The method (100) in accordance with any of the preceding claims, wherein the method (100) includes the step of laterally shifting the sample (11) in the x and/or y direction such that the first and second microscopy pictures (12a, 12a', 12a", 12b, 12b', 12b") or the regions of the first and second microscopy pictures (12a, 12a', 12a", 12b, 12b', 12b") which are introduced into the microscopy panoramic representation (10, 10') differ as regards the x and/or y perspective.

10. The method (100) in accordance with claim 9, wherein the method (100) comprises the step of determining a movement vector which describes the lateral shift in the x and/or y direction, and wherein the movement vector is determined using a change in a feature in the first and second microscopy pictures (12a, 12a', 12a", 12b, 12b', 12b").

11. The method (100) in accordance with any of claims 9 or 10, wherein the first and second sections are not directly adjacent to each other.

12. The method (100) in accordance with claim 11, wherein the method (100) comprises the step of recording the sample (11) by means of the imaging device (17) in order to obtain one or several third microscopy pictures of the sample (11) having one or several third sections connecting the first and second sections.

13. The method (100) in accordance with any of the preceding claims, wherein the method (100) comprises the step of optimizing the position of the first microscopy picture (12a, 12a', 12a") and the second microscopy picture (12b, 12b', 12b") and of further microscopy pictures among one another, wherein optimizing is performed such that an error when arranging the first, second and further microscopy pictures (12a, 12a', 12a", 12b, 12b', 12b") among one another is minimized.

14. The method (100) in accordance with any of the preceding claims, wherein steps a) and b) and d) to f) are repeated for at least two different modes.

15. The method (100) in accordance with claim 14, wherein the at least two modes are from the group comprising white light, phase contrast, fluorescence, dark field, bright field.

16. The method (100) in accordance with any of the preceding claims, wherein the method (100) comprises the step of interactively emphasizing a region which differs as regards resolution, focus and/or sharpness.

17. The method (100) in accordance with any of the preceding claims, wherein the alteration in perspective in the z direction comprises an alteration of the depth of focus.

18. A computer program having program code for performing the method in accordance with any of the preceding claims when the program runs on a computer.

19. A device (20) for generating a microscopy panoramic representation (10, 10') of a three-dimensional sample (11) having a lateral extension in the x and y directions, comprising:
an interface for receiving a first microscopy picture (12a, 12a', 12a") of the sample (11) having a first section and a second microscopy picture (12b, 12b', 12b") having a second section, wherein the first microscopy picture (12a, 12a', 12a") and the second microscopy picture (12b, 12b', 12b") differ as regards the perspective in the z direction; and
a calculating unit configured to determine change information which allows drawing conclusions as to the change in perspective in the z direction, using a difference between the first and second microscopy pictures (12a, 12a', 12a", 12b, 12b', 12b") and merge the first and second microscopy pictures (12a, 12a', 12a", 12b, 12b', 12b") while considering change information in order to obtain a microscopy panoramic representation (10, 10');
wherein the first and second microscopy pictures (12a, 12a', 12a", 12b, 12b', 12b") or a region of the first and a region of the second microscopy pictures (12a, 12a', 12a", 12b, 12b', 12b") differ as regards a magnification factor, and
wherein the calculating unit is configured to perform inserting the first or second microscopy picture (12a, 12a', 12a", 12b, 12b', 12b") into the microscopy panoramic representation (10, 10') or the region of the first microscopy picture (12a, 12a', 12a") or inserting the region of the second microscopy picture (12b, 12b', 12b") into the microscopy panoramic representation (10, 10'), and wherein that microscopy picture (12a, 12a', 12a", 12b, 12b', 12b") or that region of the microscopy picture (12a, 12a', 12a", 12b, 12b', 12b") comprising the greater magnification factor will be introduced;
wherein the calculating unit is configured to perform detecting a change in objective by means of a threshold value method and blob finding in order to determine the magnification factor; or determining the magnification factor using registerable regions in an overlapping section of the first and second microscopy pictures (12b, 12b', 12b").

20. A system comprising a microscope (19) and a device (20) in accordance with claim 19.

## Revendications

1. Procédé (100) pour créer une représentation panoramique microscopique (10, 10') d'un échantillon tridimensionnel à extension plane dans la direction x et y, aux étapes suivantes consistant à:
a) disposer (102) l'échantillon tridimensionnel (11) sur un positionneur (190);
b) prendre une vue (104) de l'échantillon (11) au moyen d'un dispositif de capture d'image (17) pour obtenir une première prise de vue microscopique (12a, 12a', 12a") de l'échantillon (11) avec une première découpe;
c) modifier (106) la perspective de l'échantillon bidimensionnel (11) dans la direction z, où une modification dans la direction z comporte une modification d'un facteur d'agrandissement;
d) prendre une vue (108) l'échantillon (11) au moyen du dispositif de capture d'image pour obtenir une deuxième prise de vue microscopique (12b, 12b', 12b") de l'échantillon (11) avec une deuxième découpe;
e) déterminer (110) une information de modification qui permet de conclure de la modification de perspective dans la direction z, sur base d'une différence entre la première et la deuxième prise de vue microscopique (12a, 12a', 12a", 12b, 12b', 12b"); et
f) regrouper (112) la première et la deuxième prise de vue microscopique (12a, 12a', 12a" 12b, 12b', 12b") en tenant compte de l'information de modification pour obtenir la représentation panoramique microscopique (10, 10');
dans lequel la première et la deuxième prise de vue microscopique (12a, 12a', 12a", 12b, 12b', 12b") ou une zone de la première prise de vue microscopique et une zone de la deuxième prise de vue microscopique (12a, 12a', 12a", 12b, 12b', 12b") diffèrent l'une de l'autre quant à un facteur d'agrandissement, et
dans lequel le procédé (100) comporte l'étape consistant à insérer la première ou la deuxième prise de vue microscopique (12a, 12a', 12a", 12b, 12b', 12b") dans la représentation panoramique microscopique (10, 10') ou à insérer la zone de la première prise de vue microscopique (12a, 12a', 12a") ou à insérer la zone de la deuxième prise de vue microscopique (12b, 12b', 12b") dans la représentation panoramique microscopique (10, 10'), et dans lequel est insérée la prise de vue microscope (12a, 12a', 12a", 12b, 12b', 12b") ou la zone de la prise de vue microscopique (12a, 12a', 12a", 12b, 12b', 12b") qui présente le facteur d'agrandissement le plus grand;
dans lequel le procédé (100) présente l'étape consistant à détecter un changement d'objectif par un procédé de seuillage et de détection de blobs pour déterminer le facteur d'agrandissement; ou dans lequel le procédé (100) présente l'étape consistant à déterminer le facteur d'agrandissement sur base de zones pouvant être alignées dans une découpe se recouvrant de la première et de la deuxième prise de vue microscopique (12b, 12b', 12b").

2. Procédé selon la revendication 1, dans lequel la première découpe et la deuxième découpe se recouvrent au moins partiellement, de sorte que la première et la deuxième prise de vue microscopique (12a, 12a', 12a", 12b, 12b', 12b") se recouvrent au moins partiellement en ce qui concerne une zone de coïncidence,
dans lequel, lors du regroupement, la première et la deuxième prise de vue microscopique (12a, 12a', 12a", 12b, 12b', 12b") sont alignées dans la zone de coïncidence pour la représentation panoramique microscopique (10, 10').

3. Procédé (100) selon l'une des revendications précédentes, dans lequel la première et la deuxième prise de vue microscopique (12a, 12a', 12a", 12b, 12b', 12b") ou dans lequel une zone de la première prise de vue microscopique (12a, 12a', 12a") et une zone de la deuxième prise de vue microscopique (12b, 12b', 12b") différent l'une de l'autre quant à une focalisation et/ou à une netteté, et
dans lequel le procédé (100) comporte l'étape consistant à insérer la première ou la deuxième prise de vue microscopique (12a, 12a', 12a", 12b, 12b', 12b") dans la représentation panoramique microscopique (10, 10') ou à insérer la zone de la première prise de vue microscopique (12a, 12a', 12a") ou la zone de la deuxième prise de vue microscopique (12b, 12b', 12b") dans la représentation panoramique microscopique (10, 10'), dans lequel est insérée la prise de vue microscopique (12a, 12a', 12a", 12b, 12b', 12b") ou la zone de la prise de vue microscopique (12a, 12a', 12a", 12b, 12b', 12b") qui présente un degré de netteté relative le plus grand.

4. Procédé (100) selon la revendication 3, dans lequel le procédé (100) présente l'étape consistant à déterminer un degré de netteté globale ou de zone par prise de vue (12a, 12a', 12a") ou par zone d'une prise de vue microscopique (12a, 12a', 12a").

5. Procédé (100) selon la revendication 4, dans lequel la détermination du degré de netteté est déterminée de sorte que dans une zone de recouvrement de la première et de la deuxième prise de vue microscopique (12a, 12a' 12a") soit déterminé, pour chaque prise de vue microscopique (12a, 12a', 12a", 12b, 12b', 12b") un degré de netteté local, et les degrés de netteté locale déterminés sont comparés l'un à l'autre.

6. Procédé (100) selon l'une des revendications précédentes, dans lequel la représentation panoramique microscopique (10, 10') présente une résolution augmentée dans la zone insérée.

7. Procédé (100) selon l'une des revendications 1 à 6, dans lequel la représentation panoramique microscopique (10, 10') présente des zones pour lesquelles existent plusieurs plans de mémorisation qui diffèrent l'un de l'autre quant à la résolution, la focalisation et/ou la netteté.

8. Procédé (100) selon l'une des revendications 3 à 7, dans lequel la première et la deuxième prise de vue microscopique (12a, 12a', 12a", 12b, 12b', 12b") qui sont regroupées dans la représentation panoramique microscopie (10, 10') ou les zones de la première et de la deuxième prise de vue microscopique (12a, 12a', 12a", 12b, 12b', 12b") qui sont insérées dans la représentation panoramique microscopie (10, 10') diffèrent l'une de l'autre dans la direction z.

9. Procédé (100) selon l'une des revendications précédentes, dans lequel le procédé (100) comporte l'étape consistant à déplacer l'échantillon (11) latéralement dans la direction x et/ou y de sorte que la première et la deuxième prise de vue microscopique (12a, 12a', 12a", 12b, 12b' 12b") ou les zones de la première et de la deuxième prise de vue microscopique (12a, 12a', 12a", 12b, 12b', 12b") qui sont insérées dans la représentation panoramique microscopique (10, 10') diffèrent l'une de l'autre quant à la perspective x et/ou y.

10. Procédé (100) selon la revendication 9, dans lequel le procédé (100) présente l'étape consistant à déterminer un vecteur de déplacement décrivant le déplacement latéral dans la direction x et/ou y, et dans lequel le vecteur de déplacement est déterminé sur base d'une modification d'une caractéristique dans la première et la deuxième prise de vue microscopique (12a, 12a', 12a", 12b, 12b', 12b").

11. Procédé (100) selon l'une des revendications 9 ou 10, dans lequel la première et la deuxième découpe ne sont pas directement adjacentes l'une à l'autre.

12. Procédé (100) selon la revendication 11, dans lequel le procédé (100) présente l'étape consistant à prendre une vue de l'échantillon (11) au moyen du dispositif de capture d'image (17) pour obtenir une ou plusieurs troisièmes prises de vue microscopiques de l'échantillon (11) avec une ou plusieurs troisièmes découpes qui relient la première et la deuxième découpe.

13. Procédé (100) selon l'une des revendications précédentes, dans lequel le procédé (100) comporte l'étape consistant à optimiser la position de la première prise de vue microscopique (12a, 12a', 12a") et de la deuxième prise de vue microscopique (12b, 12b', 12b") et d'autres prises de vue microscopiques l'une par rapport à l'autre, dans lequel l'optimisation est effectuée de sorte que soit minimisée une erreur dans la disposition de la première, de 1a. deuxième et des autres prises de vue microscopiques (12a, 12a', 12a", 12b, 12b', 12b") l'une par rapport à l'autre.

14. Procédé (100) selon l'une des revendications précédentes, dans lequel les étapes a) et b) ainsi que d) à f) sont répétées pour au moins deux modes différents.

15. Procédé (100) selon la revendication 14, dans lequel les au moins deux modes proviennent du groupe comprenant la lumière blanche, le contraste de phase, la fluorescence, le fond sombre, le fond clair.

16. Procédé (100) selon l'une des revendications précédentes, dans lequel le procédé (100) comporte l'étape consistant à mettre en évidence de manière interactive une zone qui diffère quant à la résolution, la focalisation et/ou la netteté.

17. Procédé (100) selon l'une des revendications précédentes, dans lequel la modification de la perspective dans la direction z comporte une modification de la profondeur de champ.

18. Programme d'ordinateur avec un code de programme pour la mise en oeuvre du procédé selon l'une des revendications précédentes lorsque le programme est exécuté sur un ordinateur.

19. Dispositif (20) pour créer une représentation panoramique microscopique (10, 10') d'un échantillon tridimensionnel (11) avec une extension plane dans la direction x et y, aux caractéristiques suivantes:
une interface destinée à recevoir une première prise de vue microscopique (12a, 12a', 12a") de l'échantillon (11) avec une première découpe et une deuxième prise de vue microscopique (12b, 12b', 12b") avec une deuxième découpe, où la première prise de vue microscopique (12a, 12a', 12a") et la deuxième prise de vue microscopique (12b, 12b', 12b") diffèrent l'une de l'autre quant à la perspective dans la direction z; et
une unité de calcul qui est conçue pour déterminer une information de modification qui permet de conclure de la modification de la perspective dans la direction z sur base d'une différence entre la première et la deuxième prise de vue microscopique (12a, 12a', 12a", 12b, 12b', 12b") et de regrouper la première et la deuxième prise de vue microscopique (12a, 12a', 12a", 12b, 12b', 12b") en tenant compte de l'information de modification pour obtenir une représentation panoramique microscopique (10, 10');
dans lequel la première et la deuxième prise de vue microscopique (12a, 12a', 12a", 12b, 12b', 12b") ou une zone de la première et une zone de la deuxième prise de vue microscopique (12a, 12a' 12a", 12b, 12b', 12b") diffèrent l'une de l'autre quant à un facteur d'agrandissement, et
dans lequel l'unité de calcul est conçue pour effectuer une insertion de la première ou de la deuxième prise de vue microscopique (12a, 12a', 12a", 12b, 12b', 12b") dans la représentation panoramique microscopique (10, 10') ou de la zone de la première prise de vue microscopique (12a, 12a', 12a") ou une insertion de la zone de la deuxième prise de vue microscopique (12b, 12b', 12b") dans la représentation panoramique microscopique (10, 10'), et dans lequel est insérée la prise de vue microscopique (12a, 12a', 12a", 12b, 12b' 12b") ou la zone de prise de vue microscopique (12a, 12a', 12a", 12b, 12b', 12b") qui présente le facteur d'agrandissement le plus grand;
dans lequel l'unité de calcul est conçue pour effectuer une détection d'un changement d'objectif au moyen d'un procédé de seuillage et de détection de blobs pour déterminer le facteur d'agrandissement; ou pour effectuer une détermination du facteur d'agrandissement sur base de zones pouvant être alignées dans une découpe se recouvrant de la première et de la deuxième prise de vue microscopique (12b, 12b', 12b").

20. Système comportant un microscope (19) et un dispositif (20) selon la revendication 19.
